# EUROPÄISCHE PATENTSCHRIFT

(11) **EP 2 171 867 B1**
(45) Veröffentlichungstag und Bekanntmachung des Hinweises auf die Patenterteilung: **05.01.2011**
(21) Anmeldenummer: 08773270.7
(22) Anmeldetag: 24.06.2008
(51) Int. Cl.: H04B 5/00

(54) **VERFAHREN UND VORRICHTUNG ZUR DATEN- UND/ODER ENERGIEÜBERTRAGUNG**
METHOD AND DEVICE FOR DATA AND/OR ENERGY TRANSMISSION
PROCÉDÉ ET DISPOSITIF DE TRANSFERT DE DONNÉES OU D'ÉNERGIE

(30) Priorität: 27.07.2007 DE 102007035310
(43) Veröffentlichungstag der Anmeldung: 07.04.2010
(73) Patentinhaber: Conti Temic Microelectronic GmbH, 90411 Nürnberg (DE)
(72) Erfinder: HAAS, Heinrich, 88074 Meckenbeuren (DE); SCHULTER, Wolfgang, 80709 Meersburg (DE); MÖLLER, Ulrich, 83607 Holzkirchen (DE)
(86) Internationale Anmeldenummer: PCT/DE2008/001011
(87) Internationale Veröffentlichungsnummer: WO 2009/015620

(56) Entgegenhaltungen:
- EP-A- 0 092 773
- DE-A1- 19 832 911
- US-A- 5 814 900

## Beschreibung

Die vorliegende Erfindung betrifft eine Vorrichtung und ein Verfahren zur Daten- und/oder Energieübertragung von einem vorzugsweise ortsfesten Teil auf einen scheibenförmigen bzgl. diesen ortsfesten Teil beweglichen Teil, insbesondere eine Fensterscheibe eines Kraftfahrzeugs und/oder umgekehrt. Ferner betrifft die Erfindung die Anwendung der erfindungsgemäßen Vorrichtung zum Einklemmschutz für diesen scheibenförmigen beweglichen Teil, insbesondere für die verstellbare Fensterscheibe eines Fahrzeugs und/oder zum Diebstahlschutz für ein Fahrzeug. Die erfindungsgemäße Vorrichtung kann auch als Sende- bzw. Empfangsantenne verwendet werden.

Zur Erhöhung von Sicherheit und Komfort eines Fahrzeugs werden heutzutage Fahrzeugfensterscheiben, insbesondere die verstellbaren Fensterscheiben mit verschiedenen Funktionen ausgestattet.

Bspw. beschreibt die Offenlegungsschrift DE 10 2005 003 181 A1 eine Multifunktionsfensterscheibe und ein Verfahren zum Betreiben einer Multifunktionsfensterscheibe eines Fahrzeugs. Demnach weist diese Multifunktionsfensterscheibe eine elektrische Anzeigeschicht zum Abbilden von Fahrzeugbetriebsdaten auf.

Die Offenlegungsschrift DE 10 2004 050 987 A1 beschreibt eine Fahrzeugfensterscheibe mit elektrochrom reversibel verfärbbaren Funktionselementen zum Schutz des Fahrers gegen Blendung durch von außen einfallende Lichtstrahlen.

Die Druckschrift US 5814900 A offenbart den Oberbegriff der Ansprüche 1 und 6.

Zur Realisierung der oben genannten Funktionen bedarf es elektronische Komponenten wie die elektrische Anzeigeschicht, die elektrochromen Funktionselementen, die in oder auf der Fensterscheibe angeordnet sind und mit elektrischer Energie versorgt werden und/oder Daten mit den Geräten im oder am ortsfesten Fahrzeugteil bspw. in oder an der Fahrzeugtür austauschen müssen.

Ferner bedarf es eine Vorrichtung, mit deren Hilfe Energie und/oder Daten von dem ortsfesten Fahrzeugteil bzw. von der Fahrzeugtür auf eine in dieser Fahrzeugtür eingebaute (verstellbare) Fensterscheibe und umgekehrt zu übertragen.

Die Offenlegungsschrift DE 100 03 842 A1 beschreibt eine Vorrichtung zur drahtlosen Übertragung von Signalen und Energie von beweglichen Einrichtungen auf feststehende oder bewegliche Einrichtungen, wobei die Übertragung mittels einer Übertragungsstrecke, die aus zwei gekoppelte, aufeinander abgestimmte relativ zueinander bewegbare Schwingkreise gebildet ist, erfolgt wird.

Nachteil derartiger Vorrichtung ist, dass eine derartige Übertragungsstrecke einen sehr niedrigen Wechselwirkungsgrad aufweist und die Signale, die über diese Übertragungsstrecke übertragen werden, der Umgebung insbesondere den elektromagnetischen Funkwellen ausgesetzt und somit sehr störanfällig sind. Daher ist eine derartige Vorrichtung nicht für Datenübertragung auf speziell Fahrzeugfensterscheibe geeignet, weil sich im oder am Fahrzeug relativ starke elektromagnetische Funkwelle bspw. von den Antennen des Keyless-Entry-Systems befindet.

Die Patentschrift EP 0092 773 offenbart eine Vorrichtung zur induktiven Übertragung und Auswertung von Signalen, insbesondere von Schaltbefehlen, von einer über einen vorbestimmten Weg bewegbaren, mit einem durch äußere Einwirkung betätigbaren Schalter versehenen Einrichtung zu einer Auswertestelle, wobei längs des vorbestimmten Weges oder dazu parallel eine Leiterschleife vorgesehen ist, auf die ein Wechselspannungssignal eingespeist wird, und wobei eine an der bewegbaren Einrichtung angeordnete und mit der Leiterschleife gekoppelte Induktivität durch den Schalter veränderbar ist.

Eine derartige Vorrichtung ist aber nicht für eine Daten- bzw. Energieübertragung von einem vorzugsweise ortsfesten Teil auf einen scheibenförmigen bzgl. des ortsfesten Teil beweglichen Teil, bspw. eine verstellbare Fensterscheibe geeignet, da die Anordnung einer derartigen Vorrichtung auf eine Fensterscheibe fertigungstechnisch aufwendig ist. Zudem ist eine derartige Vorrichtung ebenfalls anfällig für elektromagnetische Störungen.

Daher liegt die Aufgabe der vorliegenden Erfindung darin, eine Vorrichtung bzw. ein Verfahren der eingangs genannten Art anzugeben, welche eine störungsarme und effiziente Übertragung von Daten bzw. Energie von einem vorzugsweise ortsfesten Teil, bspw. einer Fahrzeugtür auf einen relativ zu diesem ortsfesten Teil beweglichen scheibenförmigen Teil, bspw. eine Fensterscheibe und umgekehrt ermöglicht.

Ferner sollen mittels dieser erfindungsgemäßen Vorrichtung die Position und Fahrtgeschwindigkeit bzw. die Beschleunigung des beweglichen scheibenförmigen Teils bspw. der Fensterscheibe permanent erfasst werden und mittels der erfassten Bewegungsdaten ein effektiver zuverlässiger Einklemmschutz für diesen scheibenförmigen Teil ermöglicht werden. Außerdem, soll mittels dieser erfindungsgemäßen Vorrichtung auch ein Diebstahlschutz realisiert werden.

Diese Aufgabe ist erfindungsgemäß gelöst durch eine Vorrichtung mit den Merkmalen der unabhängigen Ansprüche. Vorteilhafte Ausgestaltungen der Erfindung sind Gegenstand der Unteransprüche.

Kerngedanke der Erfindung ist, im oder auf dem beweglichen scheibenförmigen Teil bspw. einer Fensterscheibe eine Anzahl von elektrisch leitenden Strukturen in Form einer Leiterschleife und im oder am ortsfesten Teil wie zum Beispiel in der Fahrzeugtür ein Magnetkreis anzuordnen, wobei dieser Magnetkreis durch einen Spalt radial unterbrochen ist und somit eine C-Form aufweist. Der Magnetkreis ist von zumindest einer elektrisch leitenden Spule, nämlich Drosselspule umgewickelt. Der Magnetkreis besteht vorzugsweise aus ferromagnetischem Material. Derartiger Magnetkreis ist in den Fachliteraturen als unverzweigter Magnetkreis mit Luftspalt bezeichnet. Der von der Induktionsspule umschlossene Bereich des scheibenförmigen Teils, bspw. der Fensterscheibe liegt in dem Bereich zwischen dem Spalt des Magnetkreises. Der Spalt vom Magnetkreis ist nur so breit, dass sich der von der Induktionsspule umschlossene Bereich des scheibenförmigen Teils zwischen diesen Spalt gerade bewegen kann.

Beim Stillstand des scheibenförmigen Teils, bspw. der Fensterscheibe, wird diese Vorrichtung vorzugsweise zur Übertragung von Energie und/oder Daten verwendet. Das heißt, unabhängig davon, in welcher relativen Lage sich der bewegliche scheibenförmige Teil, bspw. die Fensterscheibe, zu dem ortsfesten Teil, bspw. der Fahrzeugtür befindet, können Daten und/oder Energie mit weniger Verlustleistung störungsarm von der Fahrzeugtür auf die Fensterscheibe und umgekehrt übertragen.

Beim Bewegen des scheibenförmigen Teils, bspw. der verstellbaren Fensterscheibe, kann diese erfindungsgemäße Vorrichtung zum Einklemmschutz verwendet werden. Diese Vorrichtung weist durch den sehr schmalen Spalt auf dem Magnetkreis, die ferromagnetische Eigenschaft des magnetischen Kreises und die Dimensionierung und Anordnung der Induktionsspule auf der Fensterscheibe eine hohe elektromagnetische Wechselwirkung zwischen dem Magnetkreis und der Induktionsspule auf der Fensterscheibe auf. Dadurch können die Position der Fensterscheibe, die Fahrtgeschwindigkeit und die Beschleunigung der relativen Bewegung der Fensterscheibe gegenüber der Fahrzeugtür mit relativ hoher Genauigkeit erfasst werden.

Ferner kann sowohl die Induktionsspule in oder auf der Fensterscheibe als auch der von einer Induktionsspule umgewickelte Magnetkreis als Sende-/Empfangsantenne bspw. für das Keyless-Entry System verwendet werden. Zur Gewährung einer störungsarmen funkbasierten Datenkommunikation können aber auch weitere Induktionsspule in oder auf der Fensterscheibe angeordnet werden.

Des Weiteren kann die erfindungsgemäße Vorrichtung auch zum Diebstahlschutz verwendet werden. Bspw. beim Einschlagen der Fensterscheibe oder beim gewaltsamen Abbiegen vom Fensterrahmen samt der Fensterscheibe verändert sich das Magnetfeld der bestromten Induktionsspule auf der Fensterscheibe. Diese Magnetfeldänderung induziert in der Drosselspule Induktionsstrom. Dieser Induktionsstrom wird vorzugsweise von einer Alarmanlage im Fahrzeug erfasst und löst ein Alarmsignal aus.

Durch die erfindungsgemäße Vorrichtung und/oder das erfindungsgemäße Verfahren wird in erster Linie eine kabellose Übertragung von Daten und/oder Energie zwischen elektrischen Komponenten ermöglicht, die verteilt in zumindest zwei zueinander bewegenden Teilen angeordnet sind, wobei einer der beiden Teile eine dünne breitflächige Scheibenform aufweist, bspw. eine Fensterscheibe. Damit sollen die aufwendigen Lösungen mit direkten Verkabelungen vermieden werden.

Da die Energie- bzw. Datenübertragung auf die elektromagnetische Wechselwirkung zweier Induktionsspulen basiert, können die Energie und auch Daten sowohl von der Fahrzeugtür auf die Fensterscheibe oder umgekehrt übertragen, ohne dabei diese Vorrichtung umgestalten zu müssen. Dabei wird die elektromagnetische Wechselwirkung zweier Induktionsspulen mithilfe des zwischen diesen beiden Induktionsspulen liegenden Magnetkreises verstärkt. Der Magnetkreis mit einem diesen Magnetkreis radial unterbrechenden Luftspalt ermöglicht einerseits eine Verstärkung der Wechselwirkung zwischen den beiden Induktionsspulen, indem der Magnetkreis das Magnetfeld im Bereich zwischen dem Luftspalt konzentriert, und andererseits eine Bewegung des scheibenförmigen Teils senkrecht durch diesen Luftspalt.

Im Folgenden wird die erfindungsgemäße Vorrichtung anhand eines Ausführungsbeispiels unter Zuhilfenahme von Figuren näher erläutert. Als Ausführungsbeispiel wird eine erfindungsgemäße Vorrichtung für eine Fahrzeugtür mit einer verstellbaren Fensterscheibe angezeigt. In den Figuren werden nur die für die Beschreibung der erfindungsgemäßen Vorrichtung wesentlichen Komponenten angezeigt. Zur Erhöhung der Systemzuverlässigkeit kann die Ausgestaltung der erfindungsgemäßen Vorrichtung von den gezeigten Figuren abweichen und viel komplexer sein. Zur besseren Ansicht sind die Komponenten in den Figuren unterschiedlich dimensioniert. Zum Beispiel, der Magnetkreis ist im Vergleich zur Fensterscheibe vergrößert dargestellt.

Es zeigt:
- Figur 1:: eine schematische Darstellung der erfindungsgemäßen Vorrichtung für eine Fahrzeugtür mit einer verstellbaren Fensterscheibe.
- Figur 2:: einen Querschnitt der Fensterscheibe entlang der Linie AA mit einer erfindungsgemäßen Vorrichtung gemäß der Figur 1,
- Figur 3:: eine detaillierte Darstellung der erfindungsgemäßen Vorrichtung gemäß der Figur 1.

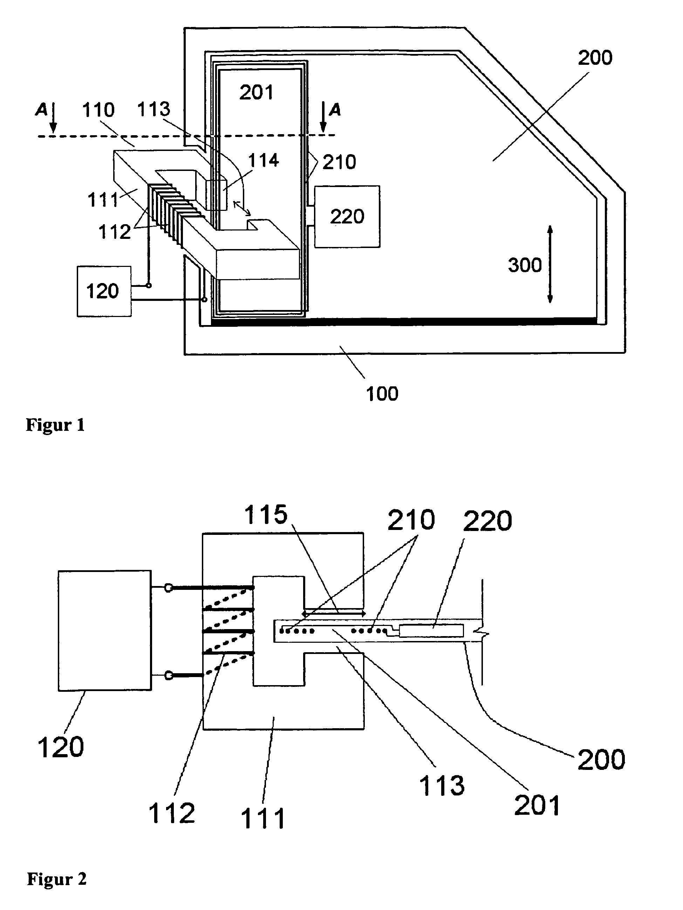

In der Figur 1 ist eine erfindungsgemäße Vorrichtung schematisch dargestellt. Als Beispiel wird hier eine Vorrichtung für eine Fahrzeugtür 100 mit einer verstellbaren 300 Fensterscheibe 200 dargestellt. Eine derartige Vorrichtung besteht im Wesentlichen aus zwei Einheiten 110 und 210. Die Einheit 110 in der Fahrzeugtür 100, vorzugsweise im Fensterrahmen, weist zumindest einen Magnetkreis 111, zumindest eine um diesen Magnetkreis 111 umwickelnden Drosselspule 112 auf. Der Magnetkreis 111 ist mit einem Luftspalt 113 versehen, der den Magnetkreis 111 radial unterbricht. Die Einheit 210 auf der Fensterscheibe 200 weist zumindest eine Induktionsspule 210 aus einer Anzahl von Wicklungen vorzugsweise in Form von einer Leiterschleife, die einen Bereich 201 der Fensterscheibe 200 umschließt. Der Luftspalt 113 des Magnetkreises 111 liegt in dem von der Induktionsspule 210 umschlossenen Bereich 201 der Fensterscheibe 200 und überschneidet sich mit diesem Bereich 201. Beim Verstellen 300 der Fensterscheibe 200 bewegt die Fenderscheibe 200, insbesondere der Bereich 201 der Fensterscheibe 200, der durch die Induktionsspule 210 umgewickelt ist, senkrecht zu dem Luftspalt 113 des Magnetkreises 111. Der Luftspalt 113 ist so breit, dass sich der von der Induktionsspule 210 umschlossenen Bereich 201 der Fensterscheibe 200 zwischen diesen Luftspalt 113 gerade bewegen kann.

Der Manetkreis 111 und der kleine Abstand zwischen den beiden Enden des Manetkreises 111 und der Induktionsspule 210 bzw. dem von dieser Induktionsspule 210 umschlossenen Bereich 201 der Fensterscheibe 200 bieten den entscheidenden Vorteil, dass der Wirkungsgrad bei der Daten- und/oder Energieübertragung zwischen den beiden Induktionsspulen 112, 210 sehr hoch ist und die Daten- und/oder Energieübertragung weniger anfällig gegenüber der elektromagnetischen Störung ist.

In oder auf der Fensterscheibe 200 ist eine elektrische bzw. elektronische Einheit 220 angeordnet. Diese Einheit 220 umfasst im Wesentlichen die Komponenten, die elektrische Energie von einer ortsfesten elektrischen Einheit 120 benötigen, Daten wie Funktionsbefehle von dieser ortsfesten Einheit 120 empfangen und/oder Sensordaten an dieser ortsfesten Einheit 120 senden. Diese können ein Energiespeicher, Datenspeicher, eine Datenauswertevorrichtung, Datenausgabeelektronik und/oder Dateneinleseelektronik sein. Außerdem, bei einer automatisch abdunkelbaren Fensterscheibe können auch die elektrochrom verfärbbaren Flächenelemente die Komponenten sein. Weiterhin ist auch denkbar, mittels geeigneter Strukturen z.B. weitere Induktionsspule auf der Fensterscheibe 200 Sende-/Empfangsantennen zu realisieren, wie sie bei berührungslosen Zutritts- oder Bediensystemen wie "Passive Entry" erforderlich sind, die keine aufwändige galvanische Verbindung zur ortsfesten Einheit 120 erfordern.

Ferner können auch Photovoltaikelemente zum Umwandeln vom Sonnenlicht in elektrischer Energie auf der Fensterscheibe 200 angeordnet werden. Diese Energie kann dann über die erfindungsgemäße Vorrichtung 110, 210 zur Fahrzeugbatterie im Fahrzeug oder zur elektrischen Komponenten der ortsfesten Einheit 120 weitergeleitet werden.

Die ortsfeste Einheit 120 umfasst alle Komponenten, die in der Fahrzeugtür 100 bzw. im Fahrzeug ortsfest angeordnet sind und die Einheit 220 auf der Fensterscheibe 200 mit Energie versorgen bzw. aus dieser Einheit 220 elektrische Energie entnehmen und/oder mit der Einheit 220 Daten austauschen.

Die Figur 2 zeigt die Draufsicht Magnetkreises des der erfindungsgemäßen Vorrichtung von der Figur 1 mit dem Querabschnitt der Fensterscheibe entlang der Linie AA in die Pfeilrichtung.

Der Luftspalt 113 des Magnetkreises 111 liegt in dem von der Induktionsspule 210 umschlossenen Bereich 201 der Fensterscheibe 200 und überschneidet sich mit diesem Bereich 201. Der Luftspalt 113 ist nur so breit, dass sich die Fensterscheibe 200 beim Verstellen 300 zwischen diesen Luftspalt 113 senkrecht zu dem Luftspalt 113 gerade bewegen kann.

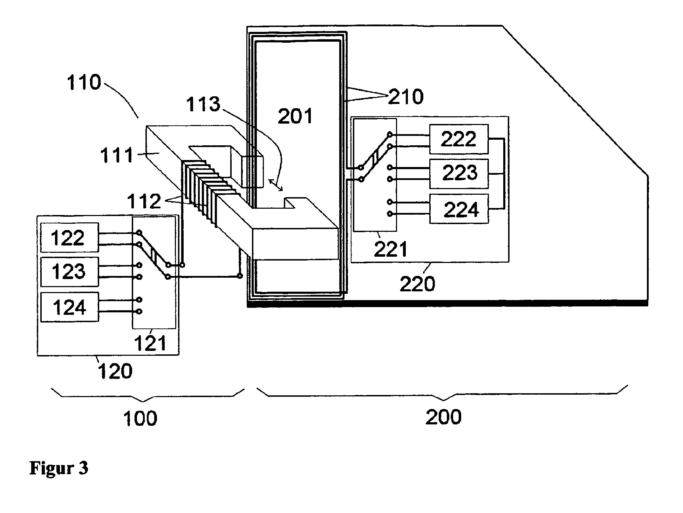

In der Figur 3 ist die erfindungsgemäße Vorrichtung von der Figur 1 detaillierter dargestellt. Gemäß dieser Figur weist die Elektronikeinheit 220 in der Fensterscheibe 200 drei Funktionseinheiten 222, 223, 224, die mittels einer Steuereinheit 221 mit der fensterseitigen Induktionsspule 210 in der Fensterscheibe 200 elektrisch schaltbar verbunden sind. Die fahrzeugseitige Elektronikeinheit 120 weist drei vorzugsweise mit den Funktionseinheiten 222, 223, 224 in der Fensterscheibe 200 korrespondierenden Funktionseinheiten 122, 123, 124, die in der Fahrzeugtür 100 und/oder im Fahrzeug, welches in dieser Figur nicht angezeigt ist, verteilt angeordnet sind und ebenfalls von einer Steuereinheit 121 mit der Induktionsspule 112, die den Magnetkreis 111 umwickelt, elektrisch schaltbar verbunden sind.

Die erste Funktionseinheit 222 auf der Fensterscheibe 200 kann ein in der Fensterscheibe 200 integrierter Energieverbraucher sein. Entsprechend kann die korrespondierende Funktionseinheit 122 im Fahrzeug bspw. ein Generator oder eine Batterie im Fahrzeug sein.

Zur Übertragung der Energie von der fahrzeugseitigen Batterie auf den Energieverbraucher in der Fensterscheibe 200 wird der in der Fensterscheibe 200 integrierte Energieverbraucher z. B. 122 mit der fensterseitigen, nämlich in der Fensterscheibe 200 integrierten Induktionsspule 210 mittels der fensterseitigen Steuereinheit 221 elektrisch verbunden. Dementsprechend wird die Batterie z. B. 122 im Fahrzeug mit der um den Magnetkreis 111 umgewickelten fahrzeugtürseitigen Drosselspule 112 mittels der fahrzeugtürseitigen Steuereinheit 121 elektrisch verbunden.

Die elektrische Energie von der fahrzeugseitigen Batterie z.B. 122 wird von der Drosselspule 112 um den Magnetkreis 111 in magnetischer Energie umgewandelt. Diese magnetische Energie wird von dem Magnetkreis 111 gebündelt in dem Spalt-Bereich 113 konzentriert. Diese Energie in Form von Magnetfeld induziert in der fensterseitigen Induktionsspule 210 den Induktionsstrom. Dieser Induktionsstrom wird dann in den Energiespeicherzellen z.B. 222 in der Fensterscheibe 200 abgespeichert.

Die Übertragung von Daten bzw. Energie erfolgt vorzugsweise beim Stillstand der Fensterscheibe 200 gegenüber der Fahrzeugtür 100, unabhängig davon, ob sich die Fensterscheibe 200 vollständig ausgefahren oder vollständig in die Fahrzeugtür 100 eingefahren ist. Mit entsprechenden Maßnahmen kann die Übertragung von Daten bzw. Energie auch während des Verstellens 300 der Fensterscheibe 200 erfolgen.

Die Funktionseinheit 222 in der Fensterscheibe 200 kann aber auch eine Gruppe von Solarzellen und Energiespeicherzellen sein, die die Sonnenenergie in elektrischer Energie umwandelt und die elektrische Energie in den Energiespeicherzellen in der Fensterscheibe 200 abspeichert. In diesem Fall wird die Energie mithilfe von der erfindungsgemäßen Vorrichtung 110, 210 vorzugsweise von den Energiespeichern in der Fensterscheibe 200 auf die Batterie im Fahrzeug übertragen.

Die erfindungsgemäße Vorrichtung 110, 210 kann zum Einklemmschutz verwendet werden. Beim Verstellen der Fensterscheibe 200, bspw. beim Schließen des Fensters, bewegt sich auch das induzierte elektromagnetische Feld von der bestromten Induktionsspule 210 relativ zum Magnetkreis 111, bzw. dem Luftspalt 113 vom Magnetkreis 111. Das "bewegende" Elektromagnetfeld erzeugt im Magnetkreis 111 Induktionsstrom, welcher dann von einem Messgerät permanent erfasst wird. Durch den Vergleich zwischen den aktuell erfassten Werten der Induktionsspannung und des Induktionsstroms und den vorher abgespeicherten Referenzwerten kann die Änderung der Fahrtgeschwindigkeit oder Beschleunigung bzw. Abbremsung der Fensterscheibe 200 ermittelt werden. Diese Änderung der Fahrtgeschwindigkeit oder Beschleunigung bzw. Abbremsung gibt wiederum Auskünfte über ein mögliches Einklemmen an der Fensterscheibe 200. Alternativ kann Drosselspule 112 um den Magnetkreis 111 mit vorzugsweise konstantem Strom bestromt werden. Dieser Strom erzeugt in dem Spalt-Bereich 113 elektromagnetisches Feld, welches seinerseits in der Induktionsspule 210 Induktionsströme erzeugt. Bewegt die Fensterscheibe 200 samt der Induktionsspule 210 bzgl. des Magnetkreises 111, so ändern sich die Induktionsspannung und der Induktionsstrom in der Induktionsspule 210. Diese Änderung wird von einer Messeinheit erfasst und zur Ermittlung der Änderung von der Fahrtgeschwindigkeit oder Beschleunigung bzw. Abbremsung der Fensterscheibe 200 weitergeleitet.

Der Luftspalt 113 des Magnetkreises 111 ist gerade nur so breit geschnitten und die Induktionsspule 210 ist in der Fensterscheibe 200 so anordnet, dass sich die Fensterscheibe 200 samt der Induktionsspule 210 gerade durch diesen Spalt 104 bewegen kann und der von der Induktionsspule 210 umschlossene Bereich 201 den Querschnitt 114 des Luftspaltes 113 in dessen Seitenlänge 115 gerade umschließt.

Beim Betrieb der erfindungsgemäßen Vorrichtung 110, 210 mit den Funktionseinheiten z. B. 124 und 224 als Diebstahlschutz wird die Drosselspule 112 um den Magnetkreis 111 mit einem vorzugsweise konstanten Strom von der Funktionseinheit 124 bestromt. Die Funktionseinheit 224 in der Fensterscheibe 200 weist vorzugsweise eine Alarmanlage auf. Die fensterseitige Induktionsspule 210 erfasst das von der fahrzeugseitigen Drosselspule 112 induzierte Magnetfeld. Beim Einschlagen der Fensterscheibe 200 oder gewaltsamen Abbiegen des Fensterrahmens samt der Fensterscheibe 200 durch einen Fahrzeugdieb verändert sich das Magnetfeld in der fensterseitigen Induktionsspule 210. Diese Veränderung vom Magnetfeld wird von der Funktionseinheit 224 erfasst und löst dort ein Alarm aus. Alternativ kann die fensterseitige Induktionsspule 210 mit einem vorzugsweise konstanten Strom bestromt werden. Das von der bestromten Induktionsspule 210 elektromagnetische Feld induziert über den Magnetkreis 111 in der Drosselspule 112 Induktionsströme. Beim Einschlagen der Fensterscheibe 200 oder gewaltsamen Abbiegen des Fensterrahmens samt der Fensterscheibe 200 durch einen Fahrzeugdieb kann der Stromfluss in der Induktionsspule 210 kann gestört bzw. unterbrochen werden. Diese Störung führt zur Änderung des elektromagnetischen Feld. Diese Änderung wirkt sich ihrerseits bei dem Induktionsstrom in der Drosselspule und führt zur Änderung des Induktionsstromes. Diese Änderung vom Induktionsstrom wird gemessen und löst ein Alarm aus.

### Bezugsnummemliste

- 100: Fahrzeugtür
- 110: Einheit der erfindungsgemäßen Vorrichtung in der Fahrzeugtür 100 integriert
- 111: Magnetkreis
- 112: Drosselspule, die den Magnetkreis 111 umwickelt
- 113: Luftspalt, der den Magnetkreis 111 radial unterbricht
- 114: Querschnitt des Luftspaltes 113
- 115: Seitenlänge des Luftspaltes 113
- 120: Ortsfeste elektrische Einheit auf bzw. in der Fahrzeugtür 100
- 121: Steuereinheit der Einheit 120
- 122, 123, 124: Funktionseinheiten der Einheit 120
- 200: Fensterscheibe
- 201: Bereich der Fensterscheibe 200, der von der Induktionsspule 210 umrandet ist
- 210: Einheit der erfindungsgemäßen Vorrichtung in der Fensterscheibe 200 integriert, nämlich die Induktionsspule in Form einer Leiterschleife
- 220: Elektrische bzw. elektronische Einheit auf bzw. in der Fensterscheibe 200
- 221: Steuereinheit der Einheit 220
- 222, 223, 224: Funktionseinheiten der Einheit 220
- 300: Verstellrichtung der Fensterscheibe 200
- AA: Querabschnitt der Fensterscheibe 200 entlang der Linie AA und Draufsicht von diesem Querabschnitt der Fensterscheibe 200 und dem Magnetkreis 111 in die Pfeilrichtung

## Patentansprüche

1. Vorrichtung zur Übertragung von Daten- und/oder Energie zwischen einer elektrischen Einheit (120) im oder am ortsfesten Teil (100) und einer elektrischen Einheit (220) in oder auf einem relativ zu diesem ortsfesten Teil (100) beweglichen scheibenförmigen Teil (200), insbesondere einer verstellbaren Fensterscheibe, wobei diese Vorrichtung (110, 210)
- zumindest eine in oder auf dem scheibenförmigen beweglichen Teil (200) angeordnete Induktionsspule (210) in Form von einer Leiterschleife und
- zumindest einen im oder am ortsfesten Teil (100) angeordneten Magnetkreis (111) aufweist,
- wobei die Übertragung von Daten und/oder Energie mithilfe von elektromagnetischer Wechselwirkung zwischen dieser Induktionsspule (210) und diesem Magnetkreis (111) erfolgt,
- wobei der Magnetkreis (111) einen Luftspalt (113) aufweist,
**dadurch gekennzeichnet, dass**
- der Luftspalt (113) in dem von der Induktionsspule (210) umschlossenen Bereich (201) des scheibenförmigen Teils (200) liegt und sich mit diesem Bereich (201) überschneidet.

2. Vorrichtung nach dem Anspruch 1, **dadurch gekennzeichnet, dass** der Luftspalt (113) den Magnetkreis (111) radial unterbricht.

3. Vorrichtung nach einem der vorangehenden Ansprüche, **dadurch gekennzeichnet, dass** der Magnetkreis (111) von zumindest einer Drosselspule (112) umgewickelt ist.

4. Vorrichtung nach einem der vorangehenden Ansprüche, **dadurch gekennzeichnet, dass** der Luftspalt (113) vom Magnetkreis (111) nur so breit ist, dass sich der von der Induktionsspule (210) umschlossene Bereich (201) des scheibenförmigen Teils (200) zwischen diesen Luftspalt (113) und senkrecht zu diesem Luftspalt (113) gerade bewegen kann (300).

5. Vorrichtung nach einem der vorangehenden Ansprüche, **dadurch gekennzeichnet, dass** die Vorrichtung die Position, die Fahrtgeschwindigkeit und die Beschleunigung der relativen Bewegung des scheibenförmigen Teils (200) gegenüber dem ortsfesten Teil (100) erfasst.

6. Verfahren zur Übertragung von Daten- und/oder Energie zwischen einer elektrischen Einheit (120) im oder am ortsfesten Teil (100) und einer elektrischen Einheit (220) in oder auf einem relativ zu diesem ortsfesten Teil (100) beweglichen scheibenförmigen Teil (200), insbesondere einer verstellbaren Fensterscheibe, wobei
- die Übertragung von Daten- und/oder Energie mithilfe elektromagnetischer Wechselwirkung zwischen zumindest einer in oder auf dem scheibenförmigen beweglichen Teil (200) angeordneten Induktionsspule (210) in Form von einer Leiterschleife und zumindest einem im oder am ortsfesten Teil (100) angeordneten Magnetkreis (111) erfolgt wird,
- wobei der Magnetkreis (111) durch einen Luftspalt (113) unterbrochen und von zumindest einer Drosselspule (112) umgewickelt ist,
**dadurch gekennzeichnet, dass**
- der Luftspalt (113) in dem von der Induktionsspule (210) umschlossene Bereich (201) des scheibenförmigen Teils (200) liegt und sich mit diesem Bereich (201) überschneidet, und
- der Luftspalt (113) vom Magnetkreis (111) nur so breit ist, dass sich der von dieser Induktionsspule (210) umschlossene Bereich (201) des scheibenförmigen Teils (200) zwischen diesen Luftspalt (113) und senkrecht zu diesem Luftspalt (113) gerade bewegbar ist (300).

7. Anwendung der Vorrichtung nach einem der Ansprüche 1 bis 5 oder des Verfahrens nach dem Anspruch 6 zum Einklemmschutz.

8. Anwendung der Vorrichtung nach einem der Ansprüche 1 bis 5 oder des Verfahrens nach dem Anspruch 6 als Sende- und/oder Empfangsantenne.

9. Anwendung der Vorrichtung nach einem der Ansprüche 1 bis 5 oder des Verfahrens nach dem Anspruch 6 zum Diebstahlschutz.

## Claims

1. Device for the transmission of data and/or energy between an electric unit (120) in or on the stationary part (100) and an electric unit (220) in or on a disk-shaped part (200) movable relative to said stationary part (100), particularly an adjustable window pane, wherein said device (110, 210)
• has at least one induction coil (210) in the form of a conductor loop arranged in or on the disk-shaped movable part (200), and
• has at least one magnetic circuit (111) arranged in or on the stationary part (100),
• wherein data and/or energy are/is transmitted by means of electromagnetic interaction between said induction coil (210) and said magnetic circuit (111),
• wherein the magnetic circuit (111) has an air gap (113),
**characterized in that** the air gap (113) is situated in the region (201) of the disk-shaped part (200) and intersects said region (201), said region (201) being enclosed by the induction coil (210).

2. Device according to claim 1, **characterized in that** the air gap (113) interrupts the magnetic circuit (111) radially.

3. Device according to any one of the preceding claims, **characterized in that** at least one choke coil (112) is wound around the magnetic circuit (111).

4. Device according to any one of the preceding claims, **characterized in that** the air gap (113) of the magnetic circuit (111) is just so wide as to enable the region (201) of the disk-shaped part (200) to just move (300) through said air gap (113) and vertically relative to said air gap (113), said region (201) being enclosed by the induction coil (210).

5. Device according to any one of the preceding claims, **characterized in that** the device detects the position, the driving speed and the acceleration of the relative movement of the disk-shaped part (200) relative to the stationary part (100).

6. Method for the transmission of data and/or energy between an electric unit (120) in or on the stationary part (100) and an electric unit (220) in or on a disk-shaped part (200) movable relative to said stationary part (100), particularly an adjustable window pane, wherein
• data and/or energy are/is transmitted by means of electromagnetic interaction between at least one induction coil (210) in the form of a conductor loop arranged in or on the disk-shaped movable part (200) and at least one magnetic circuit (111) arranged in or on the stationary part (100),
• wherein the magnetic circuit (111) is interrupted by an air gap (113) and at least one choke coil (112) is wound around the magnetic circuit (111),
• **characterized in that** the air gap (113) is situated in the region (201) of the disk-shaped part (200) and intersects said region (201), said region (201) being enclosed by the induction coil (210), and
• the air gap (113) of the magnetic circuit (111) is just so wide as to enable the region (201) of the disk-shaped part (200) to just move (300) through said air gap (113) and vertically relative to said air gap (113), said region (201) being enclosed by said induction coil (210).

7. Use of the device according to any one of claims 1 to 5 or of the method according to claim 6 for anti-trap protection.

8. Use of the device according to any one of claims 1 to 5 or of the method according to claim 6 as a transmitting and/or receiving antenna.

9. Use of the device according to any one of claims 1 to 5 or of the method according to claim 6 for theft protection.

## Revendications

1. Dispositif de transmission de données et/ou d'énergie entre une unité électrique (120) dans ou sur la partie (100) fixe et une unité électrique (220) dans ou sur une partie (200) en forme de vitre mobile par rapport à cette partie fixe (100), en particulier une vitre de fenêtre déplaçable, ce dispositif (110, 120) présentant
- au moins une bobine d'induction (210) en forme de boucle de conducteur disposée dans ou sur la partie (200) mobile en forme de vitre et
- au moins un circuit magnétique (111) disposé dans ou sur la partie (100) fixe,
- la transmission de données et/ou d'énergie s'effectuant à l'aide d'une interaction électromagnétique entre cette bobine d'induction (210) et ce circuit magnétique (111),
- le circuit magnétique (111) présentant un entrefer (113),
**caractérisé en ce que** l'entrefer (113) est situé dans la zone (201) de la partie (200) en forme de vitre entourée par la bobine d'induction (210) et se recoupe avec cette zone.

2. Dispositif selon la revendication 1, **caractérisé en ce que** l'entrefer (113) interrompt radialement le circuit magnétique (111).

3. Dispositif selon une des revendications précédentes, **caractérisé en ce que** le circuit magnétique (111) est enveloppé par au moins une bobine de self (112).

4. Dispositif selon une des revendications précédentes, **caractérisé en ce que** la largeur de l'entrefer (113) du circuit magnétique (111) est juste suffisante pour que la zone (201) de la partie (200) en forme de vitre entourée par la bobine d'induction (210) puisse précisément se déplacer (300) entre cet entrefer (113) et perpendiculairement à cet entrefer (113).

5. Dispositif selon une des revendications précédentes, **caractérisé en ce que** le dispositif détecte la position, la vitesse de déplacement et l'accélération du mouvement relatif de la partie (200) en forme de vitre par rapport à la partie (100) fixe.

6. Procédé de transmission de données et/ou d'énergie entre une unité électrique (120) dans ou sur la partie (100) fixe et une unité électrique (220) dans ou sur une partie (200) en forme de vitre mobile par rapport à cette partie fixe (100), en particulier une vitre de fenêtre déplaçable,
- la transmission de données et/ou d'énergie s'effectuant à l'aide d'une interaction électromagnétique entre au moins une bobine d'induction (210), sous forme d'une boucle de conducteur, disposée dans ou sur la partie (200) mobile en forme de vitre et au moins un circuit magnétique (111) disposé dans ou sur la partie (100) fixe,
- le circuit magnétique (111) étant interrompu par un entrefer (113) et enveloppé d'au moins une bobine de self (112),
**caractérisé en ce que**
- l'entrefer (113) est situé dans la zone (201) de la partie (200) en forme de vitre entourée par la bobine d'induction (210) et se recoupe avec cette zone (201), et
- **en ce que** la largeur de l'entrefer (113) du circuit magnétique (111) est juste suffisante pour que la zone (201) de la partie (200) en forme de vitre entourée par cette bobine d'induction (210) puisse précisément se déplacer (300) entre cet entrefer (113) et perpendiculairement à cet entrefer (113).

7. Utilisation du dispositif selon une des revendications 1 à 5 ou du procédé selon la revendication 6 pour la protection anti-coincement.

8. Utilisation du dispositif selon une des revendications 1 à 5 ou du procédé selon la revendication 6 en tant qu'antenne d'émission et/ou de réception.

9. Utilisation du dispositif selon une des revendications 1 à 5 ou du procédé selon la revendication 6 pour la protection antivol.
